# EUROPÄISCHE PATENTSCHRIFT

(11) **EP 2 241 792 B1**
(45) Veröffentlichungstag und Bekanntmachung des Hinweises auf die Patenterteilung: **25.11.2015**
(21) Anmeldenummer: 10156014.2
(22) Anmeldetag: 10.03.2010
(51) Int. Cl.: F16K 3/18

(54) **Doppelplattenschieber**
Double disk gate valve
Double robinet-vanne

(30) Priorität: 16.04.2009 DE 102009017634
(43) Veröffentlichungstag der Anmeldung: 20.10.2010
(73) Patentinhaber: Z & J Technologies GmbH, 52355 Düren (DE)
(72) Erfinder: Zingsem, Wolfgang, 41169 Mönchengladbach (DE); Marx, Norbert, 52355 Düren (DE)
(74) Vertreter: Meissner, Bolte & Partner GbR

(56) Entgegenhaltungen:
- EP-A1- 1 561 980
- WO-A1-92/21901
- GB-A- 2 146 744
- US-A- 2 843 152
- US-A- 3 486 734
- US-A- 5 116 022

## Beschreibung

Die vorliegende Erfindung betrifft einen Doppelplattenschieber, dessen Absperrplatten durch eine Betätigungsstange aus einer Offen- in eine Schließstellung und umgekehrt verschiebbar sind, wobei der Betätigungsstange eine Verriegelungseinrichtung zugeordnet ist, mittels der die Schieberplatten samt Betätigungsstange in Schließstellung fixierbar sind.

Bezüglich der Konstruktion von Doppelplattenschiebern wird auf die EP 1 561 980 A1, EP 0 450 646 A2 oder WO 98/17934 verwiesen. Die entsprechenden Konstruktionen gehen allesamt auf die Anmelderin und deren Vorgängerin zurück.

Ferner wird auf US 2 843 152 A verwiesen, die einen Doppelplattenschieber zeigt, dessen Absperr- bzw. Schieberplatten auf der einen Seite durch eine Betätigungsstange aus einer Offen- in eine Schließstellung und umgekehrt verschiebbar sind. Auf der anderen Seite der Absperr- bzw. Schieberplatten ist eine Verriegelungseinrichtung angeordnet, mittels der die Schieberplatten in Schließstellung fixierbar sind. Die Verriegelungseinrichtung ist relativ gegenüber der Betätigungsstange, auf deren Achse angeordnet und aus einer Entriegelungs- in eine Verriegelungsstellung und umgekehrt bewegbar. Durch Verstellung des Anschlags kann Einfluss auf die Schließstellung des Schiebers genommen werden.

Die EP 1 561 980 A1 offenbart einen Doppelplattenschieber, dessen Absperrplatten durch eine Betätigungsstange aus einer Offen- in eine Schließstellung und umgekehrt verschiebbar sind, wobei der Betätigungsstange eine Innenkeil zugeordnet ist, der mittels einer Kugel zentriert ist und nach einem "Keil-im-Keilprinzip" die Schieberplatten in Schließstellung verspreizt.

Die US 3 486 734 A offenbart einen Plattenschieber dessen Absperr- bzw. Schieberplatte durch eine Betätigungsstange aus einer Offen- in eine Schließstellung und umgekehrt verschiebbar ist. An der Verbindungstelle zwischen der Betätigungsstange und der Schieberplatte ist ein Anschlag offenbart, der ein zu weites Verschieben der Schieberplatte verhindert.

Die WO 92/21901 A1 offenbart einen Plattenschieber, dessen Absperr- bzw. Schieberplatten durch eine Betätigungsstange aus einer Offen- in eine Schließstellung und umgekehrt verschiebbar sind, wobei der Betätigungsstange eine Anschlagsmuffe zugeordnet ist, mittels dieser der Schließweg zwangsweise begrenzt ist.

Nicht offenbart ist in diesen Dokumenten eine Verriegelungseinrichtung, mittels der die Schieberplatten samt Betätigungsstange in Schließstellung fixierbar sind. Solche Verriegelungseinrichtung gehören jedoch ebenfalls zum Stand der Technik. Diese zeichnen sich durch einen Verriegelungskeil aus, der senkrecht zur Betätigungsstange verschiebbar ist. Die Betätigungsstange ist komplementär dazu ausgebildet. Der Nachteil dieser Konstruktion besteht darin, daß die Verriegelung nur in einer fest definierten Position der Betätigungsstange stattfinden kann. Es ist jedoch zu bedenken, daß die Schieberplatten verschleißen. Darüber hinaus ist zu bedenken, daß die elastische Vorspannung im Bereich der Dichtsitze zwischen Schieberplatten und Schiebergehäuse im Laufe der Zeit variiert. Dementsprechend variiert der sogenannte Verpreßweg von Hub zu Hub, und zwar im Bereich von 12 mm +/- 8 mm, um die notwendige Abdichtkraft zwischen Schieberplatten und Gehäuse-Dichtsitzen zu erzeugen. Mit einer fest positionierten Verriegelung der Betätigungsstange für die Schieberplatten lassen sich die Schieberplatten also nicht exakt in die optimale Schließposition mit maximaler Abdichtkraft bringen. Es muß des weiteren bedacht werden, daß die Betätigungsstange nach Erreichen der geschlossenen Position wieder einen bestimmten Betrag von bis zu 2 bis 3 mm zurückfährt, nämlich so weit, bis das an der Betätigungsstange angeordnete Kupplungsstück am Verriegelungskeil anliegt. Dieses Verhalten birgt die Gefahr einer Undichtigkeit des Schiebers in Schließstellung.

Da der Verriegelungskeil senkrecht zur Betätigungsstange und der der Betätigungsstange zugeordneten Antriebssäule hin- und herbewegbar gelagert ist, ist auch ein entsprechender Anbau an der Antriebssäule erforderlich mit der Folge eines entsprechenden Platzbedarfs.

Im Falle einer Betriebsstörung muß die volle Öffnungskraft des Hydraulikantriebs zuzüglich Federkraft der Tellerfedern im Schieber durch den Verriegelungskeil und die entsprechenden Gegenlager an der Antriebssäule und Betätigungsstange gehalten werden. Dies führt zu einem ungünstigen Kraftfluß und hat einen entsprechend hohen materialtechnischen Aufwand zur Folge. Verriegelungskeil und zugeordnete Gegenlager müssen entsprechend stark gebaut werden. Gleiche gilt für die Antriebssäule, innerhalb der die Betätigungsstange hin- und herverfahrbar gelagert ist.

Es muß also sichergestellt sein, daß der Schieber bzw. die Schieberplatten in der verpreßten Verriegelungsstellung verharren, um einen dichten und sicheren Abschluß des Schiebers zu gewährleisten. Die hohe Anpreßkraft muß auch nach Abschalten des Antriebs für die Schieberplatten bzw. deren Betätigungsstange gewährleistet sein. Im einzelnen müssen:
1. die durch das Doppelplatten-Prinzip bauartbedingte Rückstellkraft eines Tellerfederpaketes, welches in Öffnungsrichtung wirkt (ca. 700.000 N) abgefangen werden;
2. eine mögliche, durch Fehlbedienung des hydraulischen Antriebes eingeleitete Öffnung des Schiebers in vollem Umfang abgefangen werden (ca. 1.800.000 N);
3. der durch das Prinzip der kraftgesteuerten Verpressung und durch thermisch bedingte Dehnung variierende Verpreßweg muß durch die Verriegelung vollständig ausgeglichen werden (ca. 12 mm +/- 8 mm).

Des weiteren muß sichergestellt sein, daß die Verriegelung vor einem erneuten Öffnungshub vollständig aufgehoben werden kann.

Die vorgenannten Ziele lassen sich mit einem Doppelplattenschieber mit einer Verriegelungseinrichtung gemäß Anspruch 1 erreichen, wobei vorteilhafte konstruktive Ausführungsformen und Details in den Unteransprüchen beschrieben sind.

Ein wesentlicher Aspekt der vorliegenden Erfindung liegt also darin, daß die Verriegelungseinrichtung in Längsrichtung der Betätigungsstange relativ zu dieser aus einer Entriegelungs- in eine Verriegelungsstellung und umgekehrt bewegbar ist, wobei die Verriegelungsstellung entsprechend der aktuellen Schließstellung des Schiebers variabel ist. Dementsprechend paßt sich die Verriegelungseinrichtung der optimalen Verriegelungsstellung der Schieberplatten bzw. der damit verbundenen Betätigungsstange an. Die Verriegelungsstellung ist also nicht fest definiert. Damit ist es möglich, die Verriegelung stets dann vorzunehmen, wenn die Schieberplatten mit maximal vorgegebener Anpreßkraft an dem Gehäuse-Dichtsitzen anliegen.

Ein weiterer Aspekt der vorliegenden Erfindung liegt in der konkreten Konstruktion der Verriegelungseinrichtung gemäß den Ansprüchen 2 bis 6.

Ein weiterer Aspekt der vorliegenden Erfindung ergibt sich aus den Maßnahmen nach den Ansprüchen 7 und/oder 8.

Nachstehend wird eine bevorzugte Ausführungsform der Erfindung anhand der beigefügten Zeichnung näher erläutert. Diese zeigt in:
- Fig. 1: einen Doppelplattenschieber gemäß Stand der Technik im Längsschnitt;
- Fig. 2: eine Ausführungsform einer erfindungsgemäß ausgebildeten Verriegelungseinrichtung für einen Doppelplattenschieber z.B. gemäß Fig. 1 teilweise in perspektivischer Ansicht, teilweise im Längsschnitt, und zwar in vollständig geöffneter Stellung;
- Fig. 3: die Verriegelungseinrichtung entsprechend Fig. 2 in einer Stellung unmittelbar vor Einleitung des Verriegelungsvorgangs;
- Fig. 4: die Verriegelungseinrichtung entsprechend Fig. 2 oder 3 in Verriegelungsstellung; und
- Fig. 5: die Verriegelungseinrichtung in wieder geöffneter Stellung entsprechend Fig. 2.

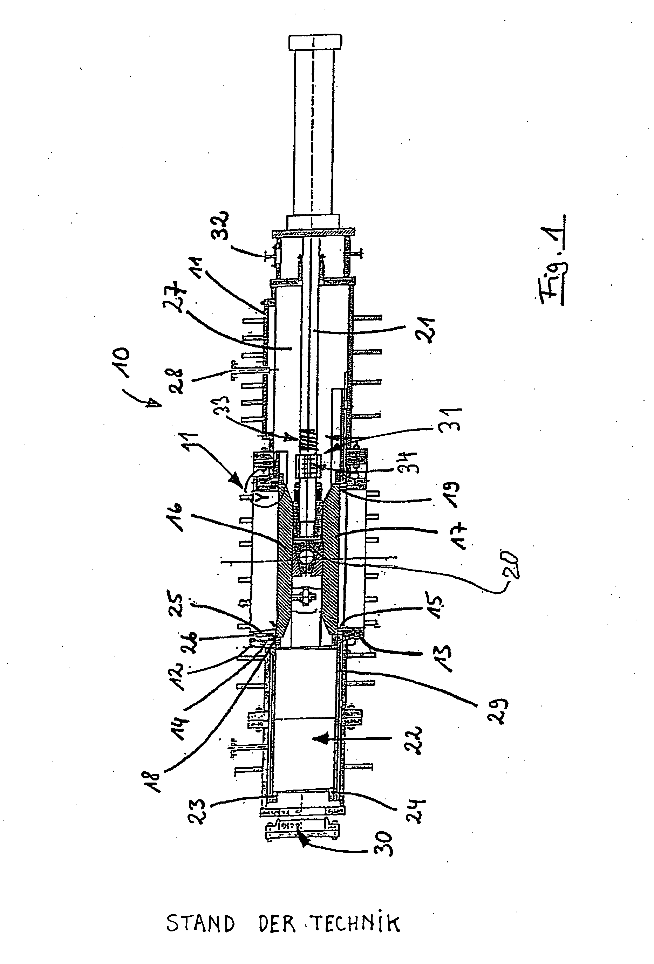

In Fig. 1 ist ein Doppelphttenschieber 10 gemäß Stand der Technik, z.B. gemäß der EP 1 561 980 A1 im Längsschnitt dargestellt. Dieser Doppelplattenschieber weist ein Schiebergehäuse 11 mit einem oberen und einem unteren Rohrstutzen 12, 13 sowie einem oberen und einem unteren Gehäusedichtsitz 14, 15 auf, zwischen denen eine obere und eine untere Absperr- bzw. Schieberplatte 16, 17 mit einem oberen bzw. einem unteren Dichtring 18, 19 verschiebbar angebracht ist. Die beiden Schieberplatten 16, 17 sind gegen die Gehäusedichtsitze 14, 15 mit Hilfe eines als Spreizorgan wirkenden Innenkeils 20 andrückbar, welcher am Ende einer Betätigungsstange 21 sitzt und mit dieser fest verbunden ist. Die Schieberplatten 16, 17 sind dazu durch den Innenkeil 20, der mittels einer Kugel zentriert ist, nach einem "Keil-im-Keil"-Prinzip spreizbar. Diese Konstruktion stellt sicher, daß der Schieber auch unter schwierigsten thermischen und dynamischen Bedingungen leicht zu betätigen ist. Neben den Schieberplatten 16, 17 und dem Innenkeil 20 ist eine Rohrbrücke 22 angeordnet, die einen oberen und einen unteren Dichtring 23, 24 aufweist. Die Rohrbrücke 22 ist hohlzylindrisch ausgebildet. Am oberen Rohrstutzen 12 sind an dessen Innenseite zwischen dem oberen Gehäusediclatsitz 14 und einer zum oberen Rohrstutzen 12 gehörenden Auflagefläche 26 Tellerfederpakete 25 angeordnet. Durch diese Tellerfederpakete 25 wird der obere Gehäusedichtsitz 14, der relativ zum oberen Rohrstutzen 12 parallel zu dessen Erstreckungsrichtung bzw. axial beweglich bzw. verschiebbar ausgebildet ist, je nach Schieberstellung gegen den Umfangsrand der oberen Schieberplatte 16 oder den oberen Dichtring 23 der Rohrbrücke 22 gedrückt.

Die Tellerfederpakete 25 sind gleichmäßig über den gesamten Umfang des oberen Gehäusedichtsitzes 14 bzw. des oberen Rohrstutzens 12 verteilt, um eine sichere Schließfunktion des Doppelplattenschiebers 10 durch ein gleichmäßiges Andrücken des oberen Gehäusedichtsitzes 14 an die obere Absperrplatte 16 bzw. deren Dichtring 18 (im geschlossenen Zustand des Schiebers) bzw. an den oberen Dichtring 23 der Rohrbrücke 22 (in Schieber-Offenstellung) zu gewährleisten. In Fig. 1 ist der Schieber in Schließstellung dargestellt. Das Schiebergehäuse 11 ist nach außen fluiddicht ausgebildet, so daß im Inneren 27 des Schiebergehäuses ein Gasdruck einstellbar ist, der auch größer sein kann als der Druck im Schieberdurchgang. Aus diesem Grunde erstreckt sich die Betätigungsstange 21 fluiddicht in das Schiebergehäuse 11 hinein. Am Schiebergehäuse 11 ist ein Anschluß 28 zur Verbindung mit einer (nicht dargestellten) Druckgasquelle, insbesondere einer Spül- und Sperrdampfquelle, angeordnet. Durch eine kontinuierliche Spülung des Inneren 27 des Schiebergehäuses 11 wird das Anbacken von Verschmutzungen und eine daraus resultierende Störung im Schieber und in der mit dem Schieber versehenen Anlage vermieden. Die Dichtflächen der Dichtringe 23, 24 einerseits und die Gehäusedichtsitze 14, 15 andererseits sind jeweils sich parallel zur Schieberbetätigungsrichtung erstreckend ausgebildet. Zur Erhöhung der Verschleißfestigkeit sind die vorgenannten Teile in an sich bekannter Weise gehärtet bzw. gepanzert. Durch Wartungsöffnungen 30 ist es möglich, insbesondere zur Rohrbrücke 22 einen leichten Zugang zu Beobachtungszwecken u. ä. zu erhalten. Die Wartungsöffnungen 30 sind bei Betrieb der Anlage, in die der Schieber integriert ist, im Normalfall mit Blindflanschen bzw. Gehäusedeckeln versehen, um so daß Gehäuse, wie vorstehend beschrieben, mit Druckgas oder Sperr- bzw. Spüldampf beaufschlagen zu können. Über einen Kühlmitteleinlaß 32 kann die Betätigungsstange 21, insbesondere an ihrem aus dem Gehäuse ragenden Ende, gekühlt werden. Dies geschieht vorzugsweise durch kalte Luft bzw. kalte Gase. An dieser Stelle sei erwähnt, daß auch eine Flüssigkeitskühlung denkbar ist.

Die Schieberplatten 16, 17 sind in einen brillenförmigen Plattenkäfig (in den Figuren nicht dargestellt), der deren Halterung sicherstellt, beweglich eingelegt. Dieser Plattenkäfig ist zwischen Leitplatten 29 geführt, womit ein Eindringen von Verunreinigungen ins Gehäuse vermieden wird.

Wie bereits eingangs erwähnt, ist der Betätigungsstange 21 vorzugsweise eine Verriegelungseinrichtung zugeordnet, mit der die Betätigungsstange in einer fest definierten Position blockierbar ist, wobei es sich dabei um die Schließstellung sowie, bei Bedarf, auch um die Öffnungsposition des Schiebers bzw. der Schieberplatten handelt.

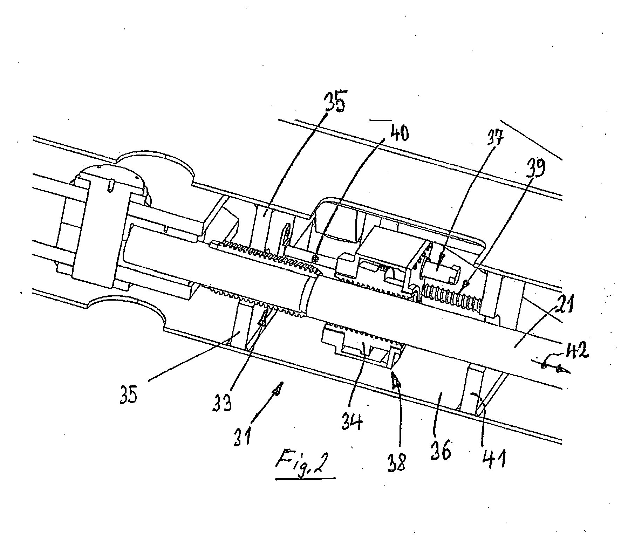

Anhand der Figuren 2 bis 5 wird nunmehr eine bevorzugte Ausführungsform einer erfindungsgemäß ausgebildeten Verriegelungseinrichtung und deren Funktion näher beschrieben. Diese Verriegelungseinrichtung, die mit der Bezugsziffer 31 gekennzeichnet ist, umfaßt einen auf der Betätigungsstange 21 angeordneten Gewindeabschnitt, insbesondere Trapezgewindeabschnitt 33 einerseits und eine auf diesen aufschraubbare Verriegelungsmutter 34 andererseits, wobei die Mutter 34 in Schließstellung des Schiebers 10 auf den Gewindeabschnitt 33 bis zu einem ortsfest gegenüber der Betätigungsstange 21 angeordneten Anschlag 35 zur Verriegelung derselben aufschraubbar ist.

Der Anschlag 35 ist Teil des Schiebergehäuses 11, im vorliegenden Fall einer die Betätigungsstange 21 aufnehmenden Antriebssäule 36, die mit dem Schiebergehäuse 11 fest verbunden ist.

Die Verriegelungsmutter 34 ist durch einen elektrischen, Pneumatik- oder - wie hier - Hydraulik-Antrieb 37 auf den Gewindeabschnitt 33 der Betätigungsstange 21 auf- bzw. abschraubbar.

Bei der dargestellten Ausführungsform ist die Verriegelungsmutter 34 innerhalb eines parallel zur Betätigungsstange 21 verschieblich gelagerten Getriebegehäuses 38 angeordnet und mit diesem längsverschieblich bewegbar.

Das Getriebegehäuse 38 ist durch eine Schraubendruckfeder 39 bei Bewegung der Betätigungsstange 21 in Schließstellung gegen den Gewindeabschnitt 33 auf der Betätigungsstange 21 drückbar, so daß die Verriegelungsmutter 34 kontrolliert auf den Gewindeabschnitt 33 aufschraubbar ist.

In Fig. 2 ist dieser Zustand noch nicht erreicht. Dort befindet sich das Getriebegehäuse 38 samt Veniegelungsmutter 34 noch vor dem Gewindeabschnitt 33. Das Getriebegehäuse 38 ist parallel zur Betätigungsstange 21 verschieblich gelagert, und zwar auf Längs-Führungsstangen 40.

Schraubenfedern 39 auf den Führungsstangen 40 bestimmen die "vordere" Position des Gehäuses 38, in welcher Gewindeabschnitt 33 und Verriegelungsmutter 34 aufeinander treffen. Die Schraubenfedern 39 sind jeweils zwischen dem Getriebegehäuse 38 und dem Schiebergehäuse 11 bzw. einem zugeordneten Anschlag 41 innerhalb der Antriebssäule 36 angeordnet, so wie dies in Fig. 2 dargestellt ist.

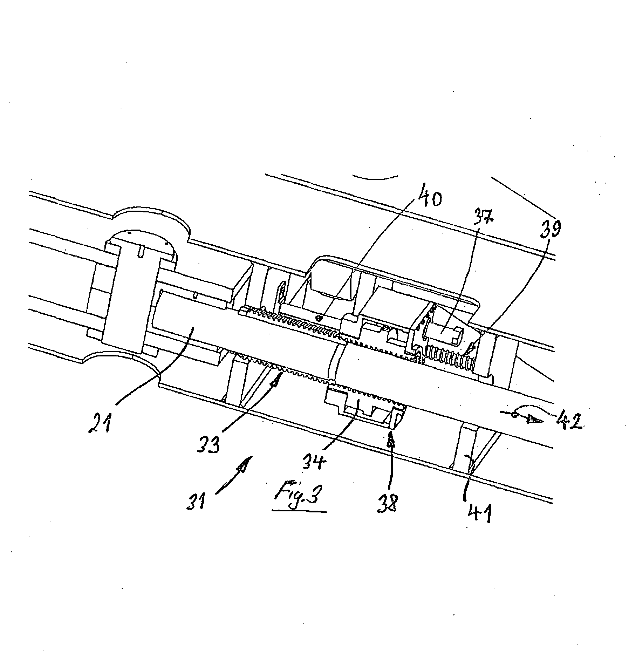

Während die Betätigungsstange 21 weiter in Schließstellung des Schiebers in Richtung des Pfeiles 42 in Fig. 3 gefahren und die mit der Betätigungsstange verbundenen Schieberplatten gegen die Gehäuse-Dichtsitze verpreßt werden, werden das Getriebegehäuse 38 samt Verriegelungsmutter 34 mitgeschoben. Die Verriegelungsmutter 34 wird dabei in Kontakt mit dem Gewindeabschnitt 33 gehalten. Durch die axiale Verschiebung des Getriebegehäuses 38 ebenfalls in Richtung des Pfeiles 42 werden die Schraubenfedern 39 auf den Führungsstangen 40 weiter vorgespannt. Toleranzen im Verpreßweg, die 12 mm +/- 8 mm betragen können, werden durch die Anfederung vollständig ausgeglichen, so daß Gewindeabschnitt 33 und Verriegelungsmutter 34 in der geschlossenen Position des Schiebers immer in Kontakt sind. Diesbezüglich wird auf Fig. 3 verwiesen.

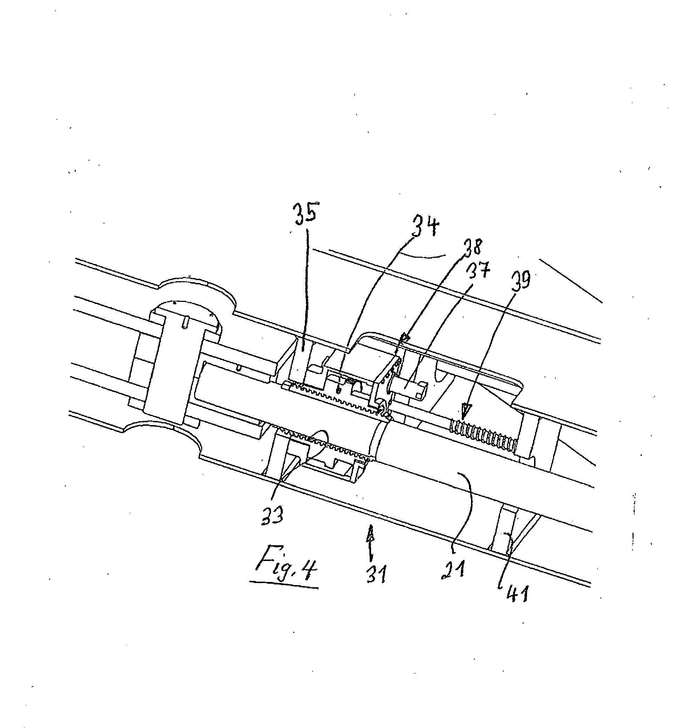

Dann erfolgt mittels eines Hydraulik-Antriebs 37 eine Drehung der Verriegelungsmutter 34 unter Zwischenschaltung von nicht näher dargestellten Zahnrädern. Durch diese Drehung wird die Verriegelungsmutter 34 auf den Gewindeabschnitt 33 der Betätigungsstange 21 aufgeschraubt, und zwar so lange, bis das Getriebegehäuse 38 am Anschlag 35 anliegt. Mittels redundanter Sensorik wird erfaßt, daß die Verriegelungsmutter bzw. das diese aufnehmende Getriebegehäuse 38 den Anschlag 35 erreicht hat. Die Drehbewegung der Verriegelungsmutter 34 wird gestoppt. Nun kann der Hydraulik-Antrieb 37 des Schiebers abgeschaltet werden, da die Betätigungsstange durch die Selbsthemmung im Trapezgewindeabschnitt 33 nun sicher in ihrer Lage verblockt ist. Die erforderliche Dichtheit des Schiebers ist gewährleistet. Die vorbeschriebene Stellung der Verriegelungsmutter 34 ist in Fig. 4 dargestellt.

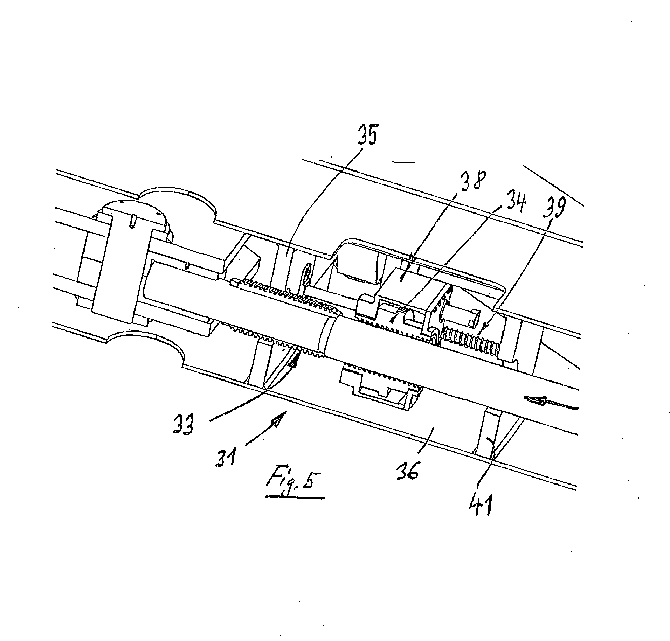

Zum Öffnen des Schiebers wird zunächst der Hydraulik-Antrieb gestartet. Die Verriegelungsmutter 34 wird vom Gewindeabschnitt 33 abgeschraubt. Ein Meßsystem nimmt die Drehung der Verriegelungsmutter auf und schaltet diese ab, sobald die Verriegelungsmutter und das zugehörige Getriebegehäuse wieder vollständig von dem Gewindeabschnitt 33 abgeschraubt sind. Die Betätigungsstange ist nun wieder vollständig entriegelt und der Schieber kann wieder geöffnet werden. Während des Öffnungshubes halten Verriegelungsmutter und Getriebegehäuse noch solange Kontakt zum Gewindeabschnitt 33, bis die Schraubendruckfedern 39 auf den Führungsstangen 40 wieder entspannt sind. Danach verharren Verriegelungsmutter 34 und Getriebegehäuse 38 in ihrer Position, während der Schieber weiter geöffnet wird. Es wird dazu auf Fig. 5 verwiesen. Die Verriegelungseinrichtung hat dann wieder die Stellung entsprechend Fig. 2.

Im Gegensatz zu den bekannten Verblockungssystemen können bei der erfindungsgemäßen Verriegelungseinrichtung durch zusätzlich installierte Sensorik wichtige Betriebszustände des Schiebers überwacht werden:
- Über einen am Hydraulikmotor oder am Antriebsritzel der Verriegelungsmutter angebrachten Drehgeber kann die exakte Position und Geschwindigkeit der Verriegelungseinrichtung bzw. der Verriegelungsmutter relativ zur Betätigungsstange ermittelt werden. Dies ermöglicht eine genaue Bestimmung, ob vollständig verriegelt bzw. entriegelt worden ist, und zwar unabhängig davon, bei welcher Position der Betätigungsstange die vollständig geschlossene Stellung des Schiebers erreicht wurde. Verriegelung bzw. Entriegelung erzeugen wichtige Freigaben für den weiteren automatischen Betrieb der Armatur bzw. eines Coker-Verschlußschiebers.
- Mittels einer im Getriebegehäuse integrierten Kraftmessung kann auch während des Betriebes, insbesondere Coker-Betriebes die Auflagekraft zwischen Verriegelung und Anschlag an der Antriebssäule gemessen werden. Diese Kraft ist ein Indikator, ob die Schieberplatten genügend stark gegen die Gehäusedichtsitze verpreßt werden. Die Überwachung dieser Kraft gibt Aufschluß über Dichtheit des Schiebers im Betrieb und eventuellen Verschleiß am inneren Keilmechanismus. Sämtliche in den Anmeldungsunterlagen offenbarten Merkmale werden als erfindungswesentlich beansprucht, soweit sie einzeln oder gegenüber dem Stand der Technik neu sind.

### Bezugszeichen:

- 10: Doppelplattenschieber
- 11: Schiebergehäuse
- 12: oberer Rohrstutzen
- 13: unterer Rohrstutzen
- 14: oberer Gehäusedichtsitz
- 15: unterer Gehäusedichtsitz
- 16: obere Schieberplatte
- 17: untere Schieberplatte
- 18: oberer Dichtring
- 19: unterer Dichtring
- 20: Innenkeil
- 21: Betätigungsstange
- 22: Rohrbrücke
- 23: oberer Dichtring
- 24: unterer Dichtring
- 25: Tellerfederpaket
- 26: Auflagefläche
- 27: Inneres des Schiebergehäuses
- 28: Anschluß
- 29: Leitplatte
- 30: Wartungsöffnung
- 31: Verriegelungseinrichtung
- 32: Kühlmitteleinlaß
- 33: Gewindeabschnitt
- 34: Verriegelungsmutter
- 35: Anschlag
- 36: Antriebssäule
- 37: Hydraulik-Antrieb
- 38: Getriebegehäuse
- 39: Schraubendruckfeder
- 40: Längs-Führungsstange
- 41: Anschlag
- 42: Pfeil

## Patentansprüche

1. Doppelplattenschieber (10), dessen Absperr- bzw. Schieberplatten (16, 17) durch eine Betätigungsstange (21) aus einer Offen- in eine Schließstellung und umgekehrt verschiebbar sind, wobei der Betätigungsstange (21) eine Verriegelungseinrichtung (31) zugeordnet ist, mittels der die Schieberplatten (16, 17) samt Betätigungsstange (21) in Schließstellung fixierbar sind, wobei die Verriegelungseinrichtung (31) in Längsrichtung der Betätigungsstange (21) relativ zu dieser aus einer Entriegelungs- in eine Verriegelungs-Stellung und umgekehrt bewegbar ist, wobei die Verriegelungsstellung abhängig von der Schließstellung des Schiebers mit vorbestimmter maximaler Anpreßkraft der Schieberplatten (16, 17) an zugeordneten Schiebergehäuse-Dichtsitzen variabel ist,
**dadurch gekennzeichnet, daß**
die Verriegelungseinrichtung (31) einen auf der Betätigungsstange (21) angeordneten Gewindeabschnitt, insbesondere Trapezgewindeabschnitt (33) einerseits und eine auf diesen aufschraubbare Verriegelungsmutter (34) andererseits umfaßt, wobei die Verriegelungsmutter (34) in Schließstellung des Schiebers (10) auf den Gewindeabschnitt (33) bis zu einem ortsfest gegenüber der Betätigungsstange (21) angeordneten Anschlag (35) zur Verriegelung derselben aufschraubbar ist,
die Verriegelungsmutter (34), insbesondere ein dieser zugeordnetes Getriebegehäuse (38) durch ein elastisches Element, insbesondere eine Schraubendruckfeder (39) bei Bewegung der Betätigungsstange (21) in Schließstellung gegen den Gewindeabschnitt (33) auf der Betätigungsstange (21) gedrückt wird, so daß die Verriegelungsmutter (34) spielfrei auf den Gewindeabschnitt (33) aufschraubbar ist.

2. Schieber nach Anspruch 1,
**dadurch gekennzeichnet, daß** der Anschlag (35) Teil des Schiebergehäuses (11), insbesondere einer die Betätigungsstange (21) aufnehmenden Antriebssäule (36) ist.

3. Schieber nach Anspruch 1 oder 2,
**dadurch gekennzeichnet, daß** die Verriegelungsmutter (34) durch einen elektrischen, Pneumatik- oder Hydraulik-Antrieb (37) auf den Gewindeabschnitt (33) der Betätigungsstange (21) auf- bzw. von diesem abschraubbar ist.

4. Schieber nach Anspruch 3,
**dadurch gekennzeichnet, daß** die Verriegelungsmutter (34) innerhalb des parallel zur Betätigungsstange (21) verschieblich gelagerten Getriebegehäuses (38) angeordnet und mit diesem längsverschieblich bewegbar ist.

5. Schieber nach Anspruch 3,
**dadurch gekennzeichnet, daß** dem Hydraulik-Antrieb oder dem Antriebsritzel der Verriegelungsmutter (34) ein Drehgeber zugeordnet ist, mit dem die Position und Ver- oder Entriegelungs-Geschwindigkeit der Verriegelungsmutter (34) feststellbar sind.

6. Schieber nach einem der Ansprüche 1 bis 4,
**dadurch gekennzeichnet, daß** an der Verriegelungsmutter (34) oder dem zugeordneten Getriebegehäuse (38) und/oder dem Anschlag (35) eine Kraftmeßeinrichtung, z.B. Dehnmeßstreifen, vorgesehen ist, um ein Maß für die Sthließkraft und ggf. auch den Verschleiß der Schieberplatten (16, 17) zu erhalten.

## Claims

1. Double-disc gate valve (10), the shut-off or valve discs (16, 17) of which can be displaced from an open position into a closed position, and vice versa, by means of an actuator rod (21), a locking device (31), by means of which the valve discs (16, 17) together with the actuator rod (21) can be fixed in the closed position, being associated with the actuator rod (21), the locking device (31) being movable in a longitudinal direction of the actuator rod (21) relative thereto from an unlocking position into a locking position, and vice versa, the locking position being variable depending on the closed position of the valve with predetermined maximum contact pressure of the valve discs (16, 17) against the associated valve housing sealing seats,
**characterised in that**
the locking device (31) comprises, on one side, a threaded portion arranged on the actuator rod (21), in particular a trapezoidally threaded portion (33), and, on the other side, a locking nut (34) which can be screwed thereon, it being possible, in the closed position of the valve (10), to screw the locking nut (34) onto the threaded portion (33) as far as a stop (35) which is arranged in fixed position relative to the actuator rod (21) for the locking thereof, the locking nut (34), in particular a gear housing (38) associated therewith, is pressed against the threaded portion (33) on the actuator rod (21) by a resilient element, in particular a helical compression spring (39), during a movement of the actuator rod (21) in the closed position, so that the locking nut (34) can be screwed onto the threaded portion (33) without play.

2. Gate valve according to claim 1, **characterised in that** the stop (35) is part of the valve housing (11), in particular is a drive column (36) accommodating the actuator rod (21).

3. Gate valve according to either claim 1 or claim 2, **characterised in that** the locking nut (34) can be screwed onto and unscrewed from the threaded portion (33) of the actuator rod (21) by means of an electric, pneumatic, or hydraulic drive (37).

4. Gate valve according to claim 3, **characterised in that** the locking nut (34) is arranged inside the gear housing (38), which is displaceably mounted in parallel with the actuator rod (21), and is movable therewith in the longitudinal direction.

5. Gate valve according to claim 3, **characterised in that** a rotary encoder is associated with the hydraulic drive or the drive pinion of the locking nut (34), by means of which rotary encoder the position and the locking and unlocking speed of the locking nut (34) can be ascertained.

6. Gate valve according to any of claims 1 to 4, **characterised in that** a force-measuring device, for example a strain gauge, is provided on the locking nut (34) or the associated gear housing (38) and/or the stop (35), for obtaining a measurement of the closing force and optionally also of the wear of the valve discs (16, 17).

## Revendications

1. Vanne à double glissière (10), dont les glissières d'arrêt ou de vanne (16, 17) peuvent être coulissées par une tige d'actionnement (21) d'une position d'ouverture vers une position de fermeture et inversement, la tige d'actionnement (21) comprenant un dispositif de verrouillage (31), à l'aide duquel les glissières de vanne (16, 17), y compris la tige d'actionnement (21) peuvent être fixées en position de fermeture, le dispositif de verrouillage (31) étant mobile dans la direction longitudinale de la tige d'actionnement (21) par rapport à celle-ci d'une position de déverrouillage vers une position de verrouillage et inversement, la position de verrouillage étant variable en fonction de la position de fermeture de la vanne avec une force de pression maximale prédéterminée des glissières de la vanne (16, 17) sur des sièges d'étanchéité correspondants du boîtier de la vanne, **caractérisée en ce que** le dispositif de verrouillage (31) comprend une portion de tige disposée sur la tige d'actionnement (21), plus particulièrement une portion filetée trapézoïdale (33) d'une part et un écrou de verrouillage (34), pouvant être vissé sur celle-ci, d'autre part, l'écrou de verrouillage (34) pouvant être vissé dans la position de fermeture de la vanne (10) sur la portion filetée (33) jusqu'à une butée (35) disposée de manière fixe par rapport à la tige d'actionnement (21), pour le verrouillage de celle-ci,
l'écrou de verrouillage (34), plus particulièrement un boîtier de transmission (38) correspondant à celui-ci, est comprimé par un élément élastique, plus particulièrement une ressort de compression hélicoïdal (39), lors du mouvement de la tige d'actionnement (21) vers la position de fermeture contre la portion filetée (33) sur la tige d'actionnement (21), de façon à ce que l'écrou de verrouillage (34) puisse être vissé sans jeu sur la portion filetée (33).

2. Vanne selon la revendication 1, **caractérisée en ce que** la butée (35) fait partie du boîtier de vanne (11), plus particulièrement d'une colonne d'entraînement (36) logeant la tige d'actionnement (21).

3. Vanne selon la revendication 1 ou 2, **caractérisée en ce que** l'écrou de verrouillage (34) peut être vissé par un entraînement électrique, pneumatique ou hydraulique (37) sur la portion filetée (33) de la tige d'actionnement (21) ou dévissé de celle-ci.

4. Vanne selon la revendication 3, **caractérisée en ce que** l'écrou de verrouillage (34) est disposé à l'intérieur du boîtier de vanne (38) logé de manière mobile parallèlement à la tige d'actionnement (21) et est mobile de manière longitudinale avec celui-ci.

5. Vanne selon la revendication 3, **caractérisée en ce que** l'entraînement hydraulique ou le pignon d'entraînement de l'écrou de verrouillage (34) comprend un capteur de rotation avec lequel la position et la vitesse de verrouillage ou de déverrouillage de l'écrou de verrouillage (34) peuvent être mesurées.

6. Vanne selon l'une des revendications 1 à 4, **caractérisée en ce que**, sur l'écrou de verrouillage (34) ou le boîtier de transmission (38) correspondant et/ou la butée (35), est prévu un dispositif de mesure de force, par exemple une jauge de contrainte, afin d'obtenir une mesure de la force de fermeture et, le cas échéant, également de l'usure des glissières de la vanne (16, 17).
